# FASCICULE DE BREVET EUROPEEN

(11) **EP 3 209 881 B1**
(45) Date de publication et mention de la délivrance du brevet: **10.07.2019**
(21) Numéro de dépôt: 15804166.5
(22) Date de dépôt: 23.10.2015
(51) Int. Cl.: F03B 1/00

(54) **TURBINE HYDRAULIQUE, ENSEMBLE PORTE ÉCLUSE A GUILLOTINE LA COMPRENANT ET PROCÉDÉ DE PRODUCTION D'ÉLECTRICITÉ A PARTIR D'ÉNERGIE HYDRAULIQUE LES UTILISANT**
WASSERTURBINE, HUBTOR FÜR EINE SCHLEUSE UMFASSEND DIE GENANNTE TURBINE UND VERFAHREN ZUR VERSTROMUNG DER HYDRAULISCHEN ENERGIE MIT DERERN HILFE
WATER TURBINE, SLIDING LOCK GATE INCLUDING THE SAME AND PROCESS TO CONVERT HYDRAULIC ENERGY INTO ELECTRICITY USING THEM.

(30) Priorité: 23.10.2014 FR 1460219
(43) Date de publication de la demande: 30.08.2017
(73) Titulaire: Thomazeau, Thierry, 85270 Saint Hilaire de Riez (FR)
(72) Inventeur: Thomazeau, Thierry, 85270 Saint Hilaire de Riez (FR)
(74) Mandataire: Cabinet Chaillot
(86) Numéro de dépôt international: PCT/FR2015/052851
(87) Numéro de publication internationale: WO 2016/062976

(56) Documents cités:
- WO-A1-88/06239
- DE-A1- 19 524 889
- DE-A1-102011 114 706
- DE-C- 904 399
- US-A- 2 655 001

## Description

La présente invention concerne le domaine de la production d'électricité à partir d'énergie hydraulique, par exemple à partir des variations du niveau de l'eau dues aux marées, appelée énergie marémotrice.

La présente invention porte en particulier sur une turbine hydraulique, sur un ensemble porte écluse à guillotine la comprenant et sur un procédé de production d'électricité à l'aide de ceux-ci.

L'énergie marémotrice, qui est une énergie permanente et prévisible, est l'énergie marine la plus développée aujourd'hui.

L'énergie des marées est récupérée par des systèmes à barrage, au travers desquels le passage de l'eau entraîne des turbines, qui déclenchent un alternateur.

Ainsi, on connaît des turbines hydrauliques permettant de produire de l'électricité à partir d'énergie hydraulique.

La plupart des turbines comprennent une roue à aubes dont la rotation résulte du fait que l'eau vient frapper les aubes avec une vitesse. L'axe de rotation de la roue à aubes peut être vertical ou horizontal, en fonction du type de turbine, et la roue à aubes est disposée de telle sorte que l'arrivée d'eau se situe soit sur l'extérieur de la roue à aubes, au-dessus ou au-dessous de la roue à aubes, soit sur l'intérieur de la roue à aubes, avec l'eau qui ne frappe les aubes que d'un côté de la roue à aubes.

On peut mentionner en particulier la turbine Canson-Montgolfier comme exemple de turbine avec entrée d'eau sur l'intérieur de la roue à aubes. Les aubes courbes sont inversées et l'arrivée d'eau se fait à l'aide d'un tube courbé qui se termine, sur l'intérieur de la couronne d'aubes, par une vanne-guillotine-injecteur dont la sortie est espacée des aubes et qui produit un jet libre puissant au ras des aubes, pour que la vitesse de l'eau au moment où elle heurte une aube soit très importante.

On peut en outre mentionner le certificat d'utilité allemand DE 904 399 C, dans lequel est décrite une turbine hydraulique comprenant un stator présentant une pluralité d'ouvertures et par lequel l'eau arrive, et un rotor formé par une roue à aubes montée à rotation autour du stator. Une pièce tubulaire est disposée entre le rotor et le stator et comprend autant de canaux que d'ouvertures du stator. Lesdits canaux débouchent dans des ouvertures de plus grande section, également pratiquées dans la pièce intermédiaire, qui elles-mêmes donnent sur les aubes du rotor. En particulier, les ouvertures du stator sont en fait des canaux formés à travers l'épaisseur du stator et ils débouchent dans les canaux de la pièce tubulaire. Un levier permet de faire tourner la pièce tubulaire par rapport au stator, afin de mettre en marche la turbine, dans la position d'ouverture représentée sur la Figure 2 de ce document antérieur, et d'arrêter la turbine par fermeture du passage entre les ouvertures du stator et les canaux de la pièce intermédiaire. Dans la position d'ouverture, l'eau passant de l'intérieur du stator aux aubes du rotor est guidée le long de chemins courbes formés par les parois des canaux du stator et de la pièce intermédiaire, avant de déboucher dans les ouvertures de plus grande section de la pièce intermédiaire, ce qui produit un jet puissant au ras des aubes et tangentiel au stator, pour que la vitesse de l'eau au moment où elle heurte une aube soit très importante.

Le certificat d'utilité allemand DE 904 399 C décrit donc une turbine reposant également sur le principe suivant lequel les aubes collectent l'énergie issue de la vitesse de l'écoulement d'eau, avec déviation de l'écoulement d'eau avant son arrivée sur les aubes.

Ainsi, le rendement de ces turbines dépend de la vitesse de l'eau lorsqu'elle frappe les aubes et lorsque l'on cherche à améliorer le rendement des turbines, on recherche généralement à rendre maximale cette vitesse.

On peut également mentionner la demande internationale de brevet WO 88/06239 qui décrit une turbine ayant un rotor et un stator, le stator formant un distributeur dans lequel est ménagée une pluralité de canaux guidant l'eau jusqu'au rotor. La section des canaux diminue à mesure que l'on s'approche du rotor, ce qui produit un jet libre puissant au ras des aubes, pour que la vitesse de l'eau au moment où elle heurte une aube soit très importante.

On connaît également du brevet américain US2655001 une turbine ayant un rotor et un stator, ayant en son sein une pluralité de canaux de forme complexe guidant l'eau jusqu'au rotor. La section des canaux diminue à mesure que l'on s'approche du rotor, jusqu'à être minimale à l'extrémité des canaux, ce qui produit un jet libre puissant au ras des aubes, pour que la vitesse de l'eau au moment où elle heurte une aube soit très importante.

Ainsi, le rendement de ces turbines dépend également de la vitesse de l'eau lorsqu'elle frappe les aubes et lorsque l'on cherche à améliorer le rendement des turbines, on recherche généralement à rendre maximale cette vitesse. La présente invention vise à proposer une turbine hydraulique ayant un bon rendement sans toutefois nécessiter une vitesse d'eau importante.

Bien que l'objectif de la présente invention ait été indiqué ci-dessus dans le contexte de l'utilisation de l'énergie marémotrice, la présente invention trouvera application dans tous les cas où elle peut être utilisée avec un plan d'eau ayant un trop plein à évacuer.

La présente invention a pour objet une turbine hydraulique destinée à être installée en sortie d'un plan d'eau, la turbine hydraulique comprenant un stator et un rotor destiné à être relié à un système de génération d'électricité, le stator étant formé par un tube, de préférence cylindrique, dans lequel débouche au moins une conduite d'arrivée d'eau, et le rotor étant formé par au moins une roue à aubes comprenant au moins deux anneaux centrés sur l'axe dudit tube et reliés entre eux par des aubes, l'au moins une roue à aubes étant montée de manière sensiblement étanche sur l'extérieur dudit tube, à rotation autour de l'axe de ce dernier, avec les aubes donnant sur l'extérieur, caractérisée par le fait qu'au moins une fenêtre de passage étant ménagée à travers la paroi dudit tube et débouchant directement sur au moins une aube de la roue à aubes en formant, avec ladite au moins une aube, un chemin sensiblement étanche vis-à-vis de l'extérieur au niveau de la transition entre le stator et ladite au moins une aube de façon à permettre l'écoulement de l'eau dans ledit chemin, du stator au rotor, jusqu'à l'extrémité libre de ladite au moins une aube, la turbine hydraulique étant destinée à être installée à une hauteur inférieure à la surface libre de l'eau dans ledit plan d'eau de telle sorte qu'en fonctionnement en régime permanent, de l'eau provenant dudit plan d'eau remplit l'au moins une conduite d'arrivée d'eau et le stator et s'écoule, en passant par l'au moins une fenêtre de passage, sur au moins une aube où elle est déviée de façon à appuyer sur celle-ci pour faire tourner la roue à aubes, avant d'être projetée vers l'extérieur en sortie de ladite au moins une aube.

En d'autres termes, la turbine hydraulique selon la présente invention est placée de telle sorte qu'en fonctionnement le niveau d'eau du plan d'eau en amont de la conduite d'entrée d'eau est supérieur à la hauteur de la conduite d'entrée d'eau, ainsi la mise en rotation du rotor autour de son axe de rotation horizontal ne dépend pas de la vitesse de l'eau entrant dans la ou les conduites d'arrivée d'eau, mais résulte de l'énergie potentielle de la hauteur d'eau, et donc de la pression qui en résulte, entre la turbine hydraulique et le plan d'eau en amont de la conduite d'arrivée d'eau.

Selon la présente invention, cette énergie résultant de la pression de l'eau est conservée, dans la plus grande mesure du possible, par l'eau tout au long de son écoulement dans le stator puis sur l'au moins une aube grâce au fait que l'eau n'est pas projetée à partir du stator sous forme de jets libres sur les aubes, et donc en partie perdue, comme cela est le cas de la turbine Canson-Montgolfier, mais au contraire s'écoule dans un chemin qui, au niveau de la transition stator/rotor, est fermé vis-à-vis de l'extérieur. On souligne ici que le stator permet une mise en pression de l'eau entre l'entrée de l'eau et l'extrémité libre des aubes.

En particulier, du fait que la ou les fenêtres de passage débouchent directement sur au moins une aube, et donc qu'aucun moyen de déviation d'écoulement n'est interposé entre le stator et la roue à aubes (en d'autres termes, la turbine hydraulique est exempt de moyen de déviation d'écoulement interposé entre le stator et la roue à aubes), aucune perte de charge, telle que celle que l'on rencontre dans le certificat d'utilité allemand DE 904 399 C, n'est observée avec la présente invention entre la fenêtre de passage et l'aube : l'ensemble de l'énergie de l'écoulement est captée par la ou les aubes lorsque ces dernières dévient l'écoulement d'eau.

Dans le cas de l'exploitation de l'énergie marémotrice, la turbine hydraulique sera installée à l'interface entre un cours d'eau ou plan d'eau soumis à la marée, tel qu'une rivière, une mer ou un océan, et un bassin de rétention d'eau, tel qu'un marais, qui constitue ledit plan d'eau mentionné aux paragraphes précédents. Ainsi, contrairement aux turbines hydrauliques de l'état antérieur de la technique, la turbine hydraulique selon la présente invention exploite la pression due au marnage et non la vitesse avec laquelle l'eau monte ou descend.

Comme indiqué ci-dessus, la turbine hydraulique selon la présente invention n'est pas limitée à une utilisation pour la production d'énergie marémotrice. La turbine hydraulique pourra être utilisée avec tout plan d'eau, en étant par exemple installée au travers d'une digue.

Avantageusement, la turbine hydraulique comprend deux conduites d'arrivée d'eau reliées aux deux extrémités du stator. Prévoir deux conduites d'arrivée d'eau permet d'augmenter encore le rendement de la turbine hydraulique.

Dans un mode de réalisation particulier, la turbine hydraulique comprend une ou plusieurs fenêtres de passage entre le stator et le rotor.

La ou les fenêtres de passage pourront avoir une section de passage, totale dans le cas de plusieurs fenêtres de passage, inférieure à celle de la ou des conduites d'arrivée d'eau, de façon à obtenir une vitesse de passage optimale, du point de vue du système de génération d'électricité qui sera relié au rotor, même pour une faible différence de hauteur d'eau entre la turbine hydraulique et le niveau de l'eau dans le plan d'eau, par exemple en cas de marnage faible dans le cas de l'exploitation de l'énergie marémotrice. La ou les fenêtres de passage pourront cependant avoir une section de passage, totale dans le cas de plusieurs fenêtres de passage, supérieure à celle de la ou des conduites d'arrivée d'eau, de façon à ralentir l'écoulement en cas de très fort marnage. Le calcul de la section de passage de la ou des fenêtres de passage se fera en fonction du site d'installation de la turbine hydraulique.

De préférence, la turbine hydraulique comprend en outre, pour la ou chaque ou plusieurs des fenêtres de passage, des moyens de régulation du passage de l'eau du stator au rotor, lesquels moyens de régulation sont aptes à faire varier la surface de la ou des fenêtres de passage en les fermant plus ou moins.

Les moyens de régulation peuvent être formés par un tube cylindrique monté entre le stator et le rotor et à rotation autour de l'axe du stator, au moins une ouverture de dimension correspondant à celle de la fenêtre de passage étant ménagée dans ledit tube cylindrique de façon à être apte à être positionnée au moins en partie en regard de la fenêtre de passage.

Ces moyens de régulation permettent d'ouvrir la ou les fenêtres de passage pour faire travailler davantage d'aubes simultanément.

Ainsi, dans le cas de l'exploitation de l'énergie marémotrice, la présence de tels moyens de régulation s'avère utile en cas de fort marnage, soit à la fin du cycle de marée. En effet, le fait de pouvoir augmenter le degré d'ouverture de la fenêtre de passage permet d'augmenter le nombre d'aubes sur lesquelles arrive le courant d'eau et donc de tirer profit au maximum de l'énergie potentielle lorsque la hauteur d'eau est plus importante ; au contraire l'ouverture minimale de la fenêtre de passage permet de faire passer une petite quantité d'eau pour alimenter par exemple une seule aube lorsque la hauteur d'eau est plus faible. En d'autres termes, les moyens de régulation permettent de conserver une vitesse nominale de la roue à aubes pour le système de génération d'électricité, en augmentant ou en diminuant le nombre d'aubes qui travailleront. Conserver une vitesse nominale de la roue à aubes permet d'éviter l'emploi d'une coûteuse boîte de vitesse.

De préférence, les moyens de régulation sont formés par au moins un piston monté à coulissement dans le stator et déplaçable en translation le long du stator, et ainsi des fenêtres de passage, par des moyens de déplacement situés d'un côté du piston, la tête de piston séparant de manière sensiblement étanche les deux espaces intérieurs du stator qui se situent de part et d'autre de la tête de piston.

Une telle configuration permet d'obtenir les mêmes avantages mentionnés ci-dessus, à savoir maintenir le meilleur rendement par conservation du nombre optimal d'aubes alimentées en eau.

Les moyens de déplacement peuvent être par exemple un vérin hydraulique ou pneumatique.

Selon un mode de réalisation particulier, sont prévues deux fenêtres de passage diamétralement opposées l'une de l'autre, la tête de piston a une base cylindrique à partir de laquelle s'étendent, côté opposé au piston, deux surfaces principales inclinées se rejoignant à une arête perpendiculaire au plan passant par les fenêtres de passage et l'axe longitudinal du stator, avec de préférence la largeur de chaque surface principale diminuant de l'arête jusqu'à la fenêtre de passage respective, où la largeur de la surface principale est sensiblement égale à celle de la fenêtre de passage, de façon à orienter l'écoulement d'eau vers les fenêtres de passage.

Bien entendu, ce principe de configuration peut être généralisé à un nombre quelconque de fenêtres de passage, la tête de piston présentant, pour chaque fenêtre de passage, une surface principale inclinée s'étendant à partir de l'extrémité libre de la tête de piston, au niveau de laquelle elle rejoint les autres surfaces inclinées, jusqu'à la fenêtre de passage respective, au niveau de laquelle elle a, de préférence, la même largeur que ladite fenêtre de passage. Des surfaces secondaires relieront les bords latéraux des différentes surfaces principales de façon à former une tête de piston qui sépare de manière sensiblement étanche les volumes intérieurs du stator qui se situent de part et d'autre de la tête de piston.

Selon un mode de réalisation particulier, la turbine hydraulique selon la présente invention comprend deux pistons, disposés avec leurs têtes opposées l'une à l'autre, leurs moyens de déplacement étant solidaires d'une cloison séparant l'intérieur du stator en deux chambres de même volume, la turbine étant alimentée par deux conduites d'arrivée d'eau.

On souligne ici que le calcul des dimensions et formes spécifiques des aubes sera réalisé en fonction du lieu où la turbine hydraulique sera installée, de la hauteur d'eau qui sera exploitable et de la quantité d'eau disponible.

Toujours en vue de tirer profit au maximum de l'énergie résultant de la pression de l'eau, le dimensionnement de la turbine hydraulique sera, de préférence, tel que le temps mis par une aube pour passer devant l'au moins une fenêtre de passage sera suffisant pour la remplir complètement, i.e. que l'eau atteigne l'extrémité libre de l'aube. Par exemple, le dimensionnement de la turbine hydraulique, y compris le positionnement de l'au moins une fenêtre de passage, pourra être tel que l'aube se remplit sur un déplacement angulaire de 10°, puis sort de l'aube en poussant sur cette dernière sur un déplacement angulaire de 80°.

Avantageusement, la turbine hydraulique sera reliée au système de génération d'électricité par l'intermédiaire d'une transmission par poulies et courroie ou chaîne, l'une des poulies étant solidaire du rotor.

Ainsi, la prise de force se trouve sur la circonférence du rotor. Il n'est donc pas nécessaire d'avoir une configuration avec un arbre d'entraînement de sortie et, du fait que le diamètre du rotor sera important, de prévoir en sortie une forte multiplication de vitesse pour le système de génération d'électricité.

Le rotor peut être monté à rotation autour du stator par l'intermédiaire de deux paliers de type butée à billes montés aux deux extrémités du stator et du rotor, chaque palier comprenant une première bague qui est solidaire du stator et une seconde bague qui est solidaire du rotor.

La ou chaque conduite d'arrivée d'eau peut être une conduite coudée présentant un angle de sensiblement 90 degrés, de telle sorte que la partie de la conduite située entre l'extrémité raccordée au stator et le coude s'étend selon l'axe de rotation du rotor, et que la partie de la conduite située entre le coude et l'extrémité opposée au stator, dite extrémité d'admission d'eau, s'étend selon un axe perpendiculaire à l'axe de rotation du rotor, l'aire de section transversale de la conduite diminuant de l'extrémité d'admission d'eau vers le coude, afin d'avoir une entrée d'eau présentant un profil hydrodynamique exempt de caractéristiques susceptibles de perturber l'écoulement d'eau.

Par ailleurs, la ou les fenêtres de passage seront, de préférence, ménagées uniquement dans l'un ou l'autre, ou les deux, du secteur angulaire allant de 0 à π et du secteur angulaire allant de 7π/6 à 0, dans le sens trigonométrique, lorsque l'on observe en bout le stator, en considérant un cercle trigonométrique centré sur l'axe du stator, avec le 0 correspondant au point du stator le plus éloigné de l'extrémité d'admission d'eau du stator et ainsi π correspondant au point opposé, côté conduite d'arrivée d'eau. En d'autres termes, la ou les fenêtres de passage ne seront avantageusement pas prévues aux environs de 08h00 et 09h00, ce qui, dans le cas où la turbine hydraulique est montée sur une porte écluse, permettrait d'éviter une trop forte éjection de l'eau au moment où l'écoulement en sortie des aubes passe à tangenter la porte écluse.

La rotation des moyens de régulation, lorsqu'ils sont formés par au moins un tube cylindrique, peut être commandée par au moins un moteur, de préférence hydraulique. On pourra utiliser deux moteurs si le tube cylindrique est de grande longueur, de façon à éviter un phénomène de torsion du tube.

L'écartement entre deux aubes consécutives pourra être sensiblement constant ou, de préférence, décroissant de l'intérieur de la roue à aubes vers l'extérieur de celle-ci. Une telle décroissance de l'écartement permet d'améliorer encore le rendement de la turbine, par la pression supplémentaire que l'eau génère à l'extrémité libre des aubes au moment où elle est éjectée.

La présente invention a également pour objet un ensemble porte écluse à guillotine destiné à être installé en sortie d'un plan d'eau, l'ensemble porte écluse comprenant une porte montée coulissante verticalement entre une position haute et une position basse dans un châssis de base fixe, caractérisé par le fait que la porte est équipée d'une turbine hydraulique telle que définie ci-dessus, la turbine hydraulique étant montée sur la porte avec la sortie de la turbine hydraulique sur un côté de la porte, et un système de génération d'électricité étant monté en partie supérieure de la porte, la porte étant montée pivotante à 180 degrés autour d'un axe vertical.

Les mouvements de coulissement et de pivotement de la porte peuvent être commandés par l'intermédiaire de capteurs de niveau d'eau positionnés de chaque côté de l'interface.

La présente invention a également pour objet un procédé de production d'électricité à partir de forces marémotrices, à l'aide de l'ensemble porte écluse tel que défini ci-dessus portant la turbine hydraulique telle que définie ci-dessus, l'ensemble porte écluse étant installé à l'interface entre un cours d'eau ou plan d'eau soumis à la marée, et un bassin de rétention d'eau, caractérisé par le fait qu'il comprend les étapes consistant à :
- à l'étalé de marée haute, la porte étant placée dans un plan sensiblement parallèle à la direction du courant d'eau et en position haute et les niveaux d'eau côté soumis à la marée et côté bassin de rétention d'eau étant équilibrés, faire pivoter la porte de 90 degrés pour la placer dans un plan perpendiculaire au courant d'eau avec la sortie de la turbine hydraulique côté soumis à la marée ;
- au fur et à mesure que le niveau d'eau côté soumis à la marée baisse, faire descendre la porte avec, de préférence, asservissement du coulissement vers le bas en fonction de signaux de niveaux d'eau fournis par des capteurs de niveau d'eau positionnés de chaque côté de ladite interface, de telle sorte que la sortie de la turbine hydraulique est en permanence à fleur avec le niveau de l'eau côté soumis à marée, jusqu'à ce que la porte atteigne la position basse ;
- à l'étalé de marée basse, faire monter la porte jusqu'à la position haute puis la faire pivoter de 90 degrés pour la placer dans un plan parallèle à la direction du courant d'eau afin d'équilibrer les niveaux d'eau côtés soumis à marée et bassin de rétention d'eau, puis, lorsque lesdits niveaux sont équilibrés, faire pivoter la porte de 90 degrés pour la placer dans un plan perpendiculaire au courant d'eau avec la sortie de la turbine hydraulique côté bassin de rétention d'eau, puis la faire descendre jusqu'à la position basse ;
- au fur et à mesure que le niveau d'eau côté bassin de rétention d'eau augmente, faire monter la porte avec, de préférence, asservissement du coulissement vers le haut en fonction de signaux de niveaux d'eau fournis par lesdits capteurs de niveau d'eau, de telle sorte que la sortie de la turbine hydraulique est en permanence à fleur avec le niveau de l'eau côté bassin de rétention d'eau ; et
- répéter les étapes précédentes.

Par ailleurs, au cours du cycle, lorsque la différence entre les niveaux d'eau côté soumis à marée et côté bassin de rétention d'eau augmentent à partir d'une valeur de différence qui est minimale, le procédé peut comprendre en outre une étape consistant à commander les moyens de régulation de façon à avoir une surface de fenêtre de passage qui augmente également à partir d'une surface qui est minimale, de façon à conserver une vitesse nominale du courant d'eau en sortie de la fenêtre de passage, la surface minimale étant définie pour obtenir ladite vitesse nominale.

Le fait de positionner en permanence la sortie de la turbine hydraulique le plus bas possible au-dessus du niveau de l'eau côté sortie permet d'obtenir la différence maximale de hauteur et donc d'exploiter au maximum l'énergie potentielle de la masse d'eau.

Est également divulguée par la présente une turbine hydraulique comprenant un stator et un rotor destiné à être relié à un système de génération d'électricité, le stator étant formé par un tube, de préférence cylindrique, dans lequel débouche au moins une conduite d'arrivée d'eau, et le rotor étant formé par au moins une roue à aubes comprenant au moins deux anneaux centrés sur l'axe dudit tube et reliés entre eux par des aubes, l'au moins une roue à aubes étant montée sur l'extérieur dudit tube, à rotation autour de l'axe de ce dernier, avec les aubes donnant sur l'extérieur, au moins une fenêtre de passage étant ménagée à travers la paroi dudit tube et débouchant sur au moins une aube de la roue à aubes, de telle sorte qu'en fonctionnement de l'eau s'écoule du stator, en passant par l'au moins une fenêtre de passage, sur au moins une aube de façon à appuyer sur celle-ci pour faire tourner la roue à aubes, caractérisée par le fait que la turbine hydraulique comprend en outre, pour la ou chaque ou plusieurs des fenêtres de passage, des moyens de régulation du passage de l'eau du stator au rotor, lesquels moyens de régulation sont aptes à faire varier la surface de la ou des fenêtres de passage en les fermant plus ou moins, les moyens de régulation étant, de préférence, formés par au moins un piston monté à coulissement dans le stator et déplaçable en translation le long du stator, et ainsi des fenêtres de passage, par des moyens de déplacement situés d'un côté du piston, la tête de piston séparant de manière sensiblement étanche les deux espaces intérieurs du stator qui se situent de part et d'autre de la tête de piston.

Les caractéristiques techniques mentionnées ci-dessus en liaison avec la présente invention peuvent être combinées avec la turbine hydraulique définie au paragraphe précédent.

Pour mieux illustrer l'objet de la présente invention, on va en décrire ci-après un mode de réalisation particulier avec référence au dessin annexé.

Sur ce dessin :
- la Figure 1 est une vue de dessus de la turbine hydraulique selon un premier mode de réalisation de la présente invention, montée sur une porte écluse ;
- la Figure 2 est une vue, simplifiée, en coupe transversale selon II-II sur la Figure 1, les moyens de régulation étant en position d'ouverture minimale de la fenêtre de passage ;
- la Figure 3 est une vue analogue à la Figure 2, les moyens de régulation étant en position d'ouverture maximale de la fenêtre de passage ;
- la Figure 3A est une vue de détail de plusieurs aubes selon une variante du premier mode de réalisation ;
- la Figure 4 est une vue en coupe longitudinale de la région d'extrémité du rotor et du stator ;
- la Figure 5 est un schéma en plan de l'ensemble porte écluse, avec la porte en position basse ;
- la Figure 6 est un schéma analogue de l'ensemble porte écluse, avec la porte en position haute et fermant le plan d'eau ;
- la Figure 7 est un schéma analogue à la Figure 6, avec la porte ouvrant le plan d'eau ;
- la Figure 8 est une vue schématique de l'ensemble porte écluse de l'invention au moment de l'étale de pleine mer, après équilibrage des niveaux côté soumis à marée et côté bassin de rétention d'eau ;
- les Figures 9A à 9C sont des vues schématiques de l'ensemble porte écluse à différentes positions lors de la marée descendante ;
- la Figure 10 est une vue schématique de l'ensemble porte écluse au moment de l'étale de basse mer, après équilibrage des niveaux ; et
- les Figures 11A à 11C sont des vues schématiques de l'ensemble porte écluse à différentes positions lors de la marée montante
- la Figure 12 est une vue en perspective de la turbine hydraulique selon un second mode de réalisation de la présente invention, montée sur un barrage ;
- la Figure 13 est une vue schématique en coupe de la turbine hydraulique selon le plan B-B de la Figure 14, selon le second mode de réalisation de la présente invention ;
- la Figure 14 est une vue schématique en coupe de la turbine hydraulique selon le plan A-A de la Figure 13, selon le second mode de réalisation de la présente invention ;
- la Figure 15 est une vue schématique et en coupe horizontale d'une variante de la turbine hydraulique selon le second mode de réalisation de la présente invention.

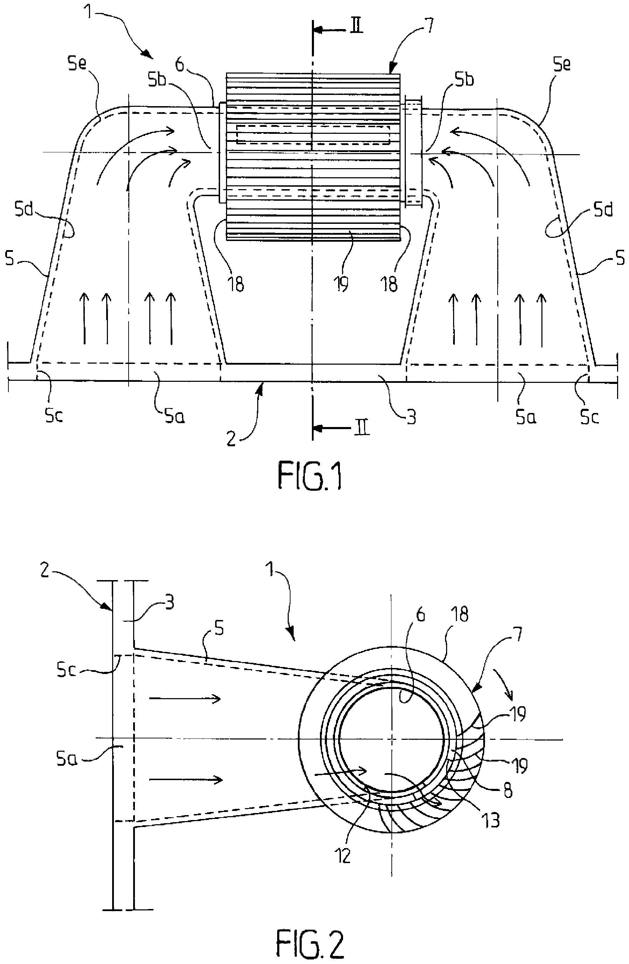

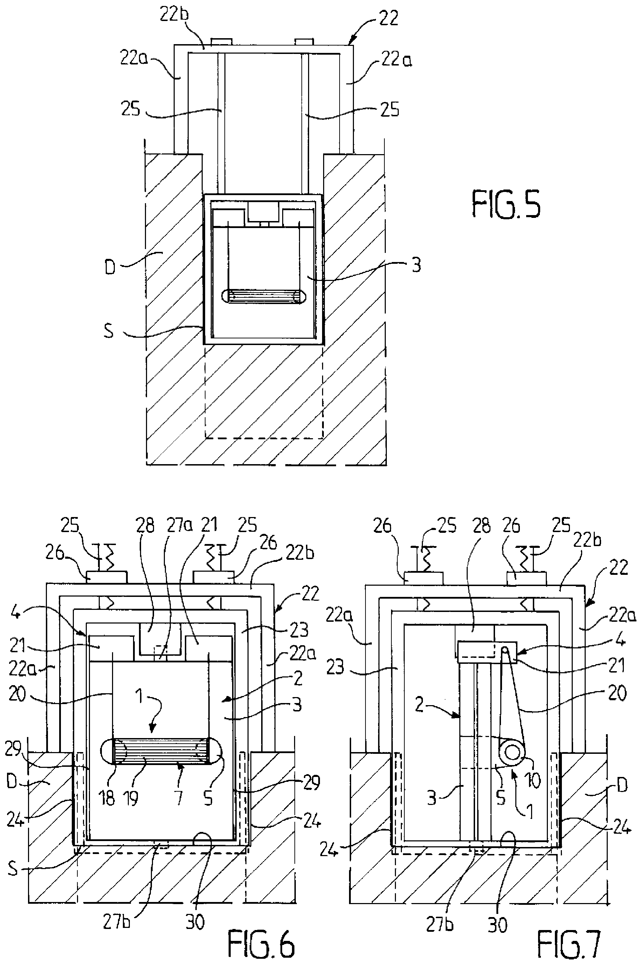

Si l'on se réfère aux Figures 1 à 4, on peut voir que l'on y a représenté une turbine hydraulique 1 selon un premier mode de réalisation de la présente invention, installée sur un ensemble porte écluse 2 dont seule la porte 3 est visible ici, également équipée d'un système de génération d'électricité 4 (Figures 6 et 7).

L'ensemble porte écluse 2 est positionné à l'interface entre un cours d'eau ou plan soumis à marée, tel qu'un océan, et un réservoir d'eau ou bassin de rétention d'eau.

La turbine hydraulique 1 comprend deux conduites d'arrivée d'eau 5, un stator 6, un rotor 7, un régulateur 8, des paliers 9 et une poulie 10.

Les conduites d'arrivée d'eau 5 sont fixées au stator 6, au niveau de brides 11 aux deux extrémités de celui-ci.

Le stator 6 se présente sous la forme d'un tube cylindrique d'axe horizontal et qui comprend une fenêtre de passage 12 le long de son axe longitudinal. La fenêtre de passage 12 est une fente rectangulaire de faible largeur.

En particulier, la fenêtre de passage 12 a une longueur comprise entre 2 et 3,5 mètres, et une largeur équivalente à l'écartement d'entrée entre 2 aubes.

Le stator 6 peut avoir un diamètre d'environ 0,5 m à environ 0,7 m.

En variante, indépendamment des autres caractéristiques de la turbine 1, le stator 6 pourrait par exemple être formé par un tube dont la section transversale est ovale ou est une ellipse, avec de préférence une fenêtre au niveau du grand axe de l'ellipse, de façon encore davantage préférée une fenêtre à chaque extrémité du grand axe de l'ellipse.

Chaque conduite d'arrivée d'eau 5 est un tube horizontal à section variable comprenant une extrémité d'admission d'eau 5a et une extrémité opposée 5b de raccordement au stator 6. La section au niveau de l'extrémité d'admission 5a est supérieure à la section au niveau de l'extrémité de raccordement 5b. Plus précisément, le tube à section variable comprend une partie de tube cylindrique 5c à section constante comprenant l'extrémité d'admission d'eau 5a, et une partie de tube conique 5d qui s'effile à partir de la partie de tube cylindrique 5c et qui s'achève par un coude 5e faisant un angle d'approximativement 90 degrés, dans le plan horizontal, et aboutissant au stator 6 au niveau de l'extrémité de raccordement 5b.

Le régulateur 8 se présente sous la forme d'un tube cylindrique monté à rotation sur le stator 6 par l'intermédiaire d'un roulement à aiguilles 8a à chaque extrémité du régulateur 8. Un joint d'étanchéité 8b est monté devant le roulement à aiguilles 8a afin d'éviter une fuite d'eau entre le régulateur 8 et le stator 6. Le régulateur 8 comprend une ouverture 13 le long de son axe longitudinal. L'ouverture 13 a une forme rectangulaire de faible largeur. L'axe longitudinal du régulateur 8 coïncide avec l'axe longitudinal du stator 6. La longueur du régulateur 8 est sensiblement égale à la longueur du stator 6 et son diamètre est légèrement supérieur. Les dimensions de l'ouverture 13 sont les mêmes que celles de la fenêtre de passage 12.

Le régulateur 8 est apte à tourner autour du stator 6 avec un axe de rotation qui est l'axe longitudinal du stator 6, sous la commande d'un moteur hydraulique 14 fixé sur une bride 11 et dont l'arbre de sortie 15 entraîne en rotation un pignon 16 qui engrène un chemin denté 17 solidaire du régulateur 8, par exemple formé par une section de couronne à denture externe soudée ou boulonnée sur l'extérieur du régulateur 8.

Le régulateur 8 peut ainsi, sous la commande du moteur 14, être déplacé pour obturer presque entièrement la fenêtre de passage 12 de façon à que l'eau qui passe à travers cette dernière vienne s'écouler sur une seule aube, ou pour ouvrir la fenêtre de passage 12 à un quelconque degré d'ouverture jusqu'à une ouverture totale, afin de faire travailler un plus grand nombre d'aubes et conserver une vitesse nominale du rotor 7.

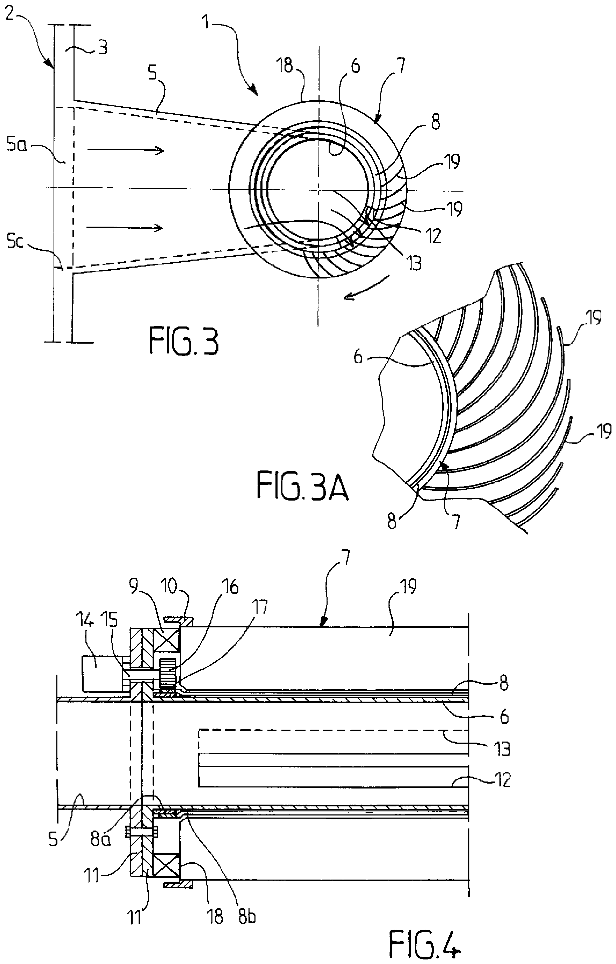

Le rotor 7 est une roue à aubes comprenant ici deux anneaux 18 entre lesquels sont fixées des aubes radiales 19. La longueur des aubes 19 est sensiblement égale à la longueur du stator 6. Les deux anneaux 18 ont un diamètre interne supérieur au diamètre du régulateur 8 et s'étendent le long d'un même axe longitudinal. Les aubes 19 sont des aubes courbes écartées les unes des autres sur la périphérie des anneaux 18. Les aubes 19 sont telles que l'écartement entre deux aubes 19 consécutives est constant (Figure 3) ou est plus grand à l'extrémité intérieure de l'aube 19, côté stator 6, qu'à l'extrémité extérieure opposée (Figure 3a). Par exemple, l'écartement peut être constant sur un tiers de l'aube puis diminuer progressivement pour que l'écartement à l'extrémité extérieure soit égal à la moitié de celui à l'extrémité intérieure. Le rotor 7 peut avoir une longueur d'environ 2 à 3 m.

On souligne ici que la roue à aubes est montée sur le stator 6 de telle sorte que l'intervalle entre le bord intérieur des aubes 19 et la surface extérieur du stator 6 est suffisamment petit pour que la quantité d'eau s'échappant par ledit intervalle soit si faible par rapport à la quantité d'eau passante que cela ne se traduit pas par une diminution de pression de l'eau dans le stator 6/rotor 7 ou par une diminution de pression très faible, par exemple de pas plus de 10 %. C'est ce que l'on entend par l'expression « façon sensiblement étanche vis-à-vis de l'extérieur ».

Un palier 9 de type butée à billes, est prévu à chaque extrémité du stator 6. Chaque palier 9 comprend une première bague qui est solidaire d'une bride 11 du stator 6 et une seconde bague qui est solidaire d'un anneau 18 du rotor 7. Ainsi, le rotor 7 est monté à l'extérieur du stator 6 et est apte à tourner autour du stator 6.

On souligne ici qu'il est possible de prévoir deux moteurs pour actionneur le régulateur 8, un à chaque extrémité du stator 6. Dans ce cas, l'une des brides du stator sera démontable. Par exemple, elle aura son diamètre intérieur fileté et elle sera vissée sur le stator 6 dont le diamètre extérieur sera fileté. Ainsi, le régulateur 8, le rotor 7 et les roulements à aiguilles 8a pourront être montés avant de visser la bride. Ceci permettra aussi d'avoir un réglage final de la longueur du stator 6 nécessaire pour le couple de serrage des butées à bille 9.

Une poulie crantée 10 est solidaire du rotor 8 à une extrémité de ce dernier. La poulie crantée 10 est une poulie classique, avec une fixation adaptée aux flasques du rotor 7.

Comme on peut le voir schématiquement sur les Figures 6 et 7, une courroie 20 est enroulée à une extrémité sur la poulie 10 et à l'autre extrémité sur une poulie de plus petit diamètre reliée à une génératrice représentée schématiquement en 21 et faisant partie du système de génération d'électricité 4. Ainsi, la rotation de la poulie 10 de la turbine 1 entraîne la rotation de la poulie de la génératrice 21.

Si l'on se réfère maintenant aux Figures 5 à 7, on peut voir que l'ensemble porte écluse 2 selon la présente invention comprend un châssis de base 22 fixé au sol, un cadre mobile 23, la porte 3, des rails de guidage désignés en 24, deux crémaillères verticales 25, deux moteurs de crémaillère 26, un axe de rotation verticale supérieur 27a et un axe de rotation verticale inférieur 27b, un moteur 28 de rotation verticale de la porte 3, et des joints d'étanchéité 29 et 30.

La porte 3 est une porte de type guillotine pouvant avoir une largeur de 3 à 4 mètres et une hauteur d'environ 11 mètres pour une utilisation sur un site où le marnage moyen est de 5 mètres.

La porte 3 est montée pivotante autour d'un axe vertical et coulissante verticalement par rapport au châssis de base 22, et est supportée par le cadre mobile 23.

Le châssis de base 22 comprend deux montants verticaux 22a d'une hauteur de 5-6 mètres au-dessus de la digue D au travers de laquelle l'ensemble porte écluse 2 est installé, les montants 22a étant reliés l'un à l'autre à leur sommet par une traverse 22b.

La hauteur du châssis de base 22 est d'environ 1,5 fois la hauteur de la porte 3.

Le cadre mobile 23 est monté coulissant verticalement dans deux rails de guidage 24 verticaux fixés de chaque côté de la souille S, cette dernière étant d'une profondeur de 6 m au-dessous de la basse mer pour un marnage moyen de 5 m.

Le mouvement de coulissement vertical du cadre mobile 23 le long des rails de guidage 24 est commandé par deux crémaillères 25 solidaires du cadre mobile 23. Les montants verticaux du cadre mobile 23 assurent également l'étanchéité verticale en appuyant en 29 sur les rails de guidage 24. L'étanchéité horizontale est assurée par un joint horizontal 30 fixé de chaque côté de la souille, qui vient s'appuyer sur le côté droit ou gauche de la partie inférieure (sous la turbine) de la porte 3 (opposé au côté où la pression s'exerce. De plus, ici une étanchéité parfaite n'est pas requise, le débit de fuite, qui pourrait être de 10 m³/heure, est négligeable par rapport au débit moyen à la turbine hydraulique, qui pourrait être par exemple de 10 000 m³/heure. Chaque crémaillère 25 s'étend à la verticale à partir du sommet du cadre mobile 23 et passe à travers une ouverture correspondante ménagée dans la traverse 22b. Chaque crémaillère 25 est en prise avec un pignon de sortie d'un moteur 26 monté sur la traverse 22b. Les moteurs 26 peuvent être, par exemple, des moteurs pas-à-pas. A l'évidence, la rotation du pignon de sortie entraînera une translation de la crémaillère 25 vers le haut ou vers le bas, en fonction du sens de rotation du pignon de sortie.

Le mouvement de pivotement de la porte 3 est commandé par le moteur 28 qui est porté en partie supérieure du cadre mobile 23 et qui est en prise avec l'axe de rotation supérieur 27a, lequel est solidaire de la porte 3 et s'étend à la verticale vers le haut à partir du centre du sommet de cette dernière. La porte 3 peut ainsi tourner autour d'un axe vertical passant par le centre de la porte 3 et définit par les axes de rotation supérieur 27a et inférieur 27b. L'axe de rotation 27b est solidaire de la partie inférieure de la porte 3 et est relié à rotation à la partie inférieure du cadre mobile 23.

La turbine hydraulique 1 est fixée à la porte 3 à une hauteur d'environ 6 mètres, avec la sortie d'eau du rotor 7 d'un côté de la porte 3 et les extrémités d'admission d'eau 5a des conduites d'arrivée d'eau 5 de l'autre côté de la porte 3. L'axe longitudinal du stator 6 et du rotor 7 est donc un axe sensiblement horizontal. Ainsi, la turbine hydraulique 1 est supportée par l'intermédiaire des conduites d'arrivée d'eau 5. Le système de génération d'électricité 4 est fixé au voisinage du sommet de la porte 3.

Il convient de noter que le système de génération d'électricité 4 pourrait comprendre deux génératrices 21 être fixés à la porte 3, auquel cas on pourra prévoir deux poulies crantées 10, deux courroies 20, etc.

En fonctionnement, la porte 3 coulisse verticalement vers le haut ou vers le bas dans le châssis de base 22, en suivant la montée ou la descente du niveau d'eau du côté de la porte 3 sur lequel se trouve le rotor 7, de telle sorte que la partie la plus inférieure de la turbine hydraulique 1 est positionnée à fleur avec le niveau de l'eau.

Par conséquent, la différence entre les niveaux d'eau haut et bas est rendue maximale, et l'écoulement est optimal.

La porte 3 pivote automatiquement de 90 degrés lorsque les niveaux d'eau dans le réservoir d'eau et le côté soumis à marée sont sensiblement égaux, c'est-à-dire à l'étale de marée basse ou à l'étale de marée haute.

Lorsque le niveau d'eau est plus élevé du côté de la porte 3 opposé à celui où se trouve le rotor 7, l'eau entre dans les deux conduites d'arrivée d'eau 5 puis dans le stator 6, puis sous l'effet de la pression, s'écoule à travers la fenêtre de passage 12 du stator 6 dont la surface est réglée par la rotation du régulateur 8. L'écoulement d'eau sous pression traverse la ou les aubes 19 de l'intérieur du rotor 7 vers l'extérieur, ce qui provoque la mise en rotation du rotor 7 et actionne le système de génération d'électricité 4 par l'intermédiaire des poulies 10 et des courroies 20. Ainsi, le mouvement linéaire d'écoulement d'eau est transformé par la turbine hydraulique 1 en un mouvement rotatif exploitable.

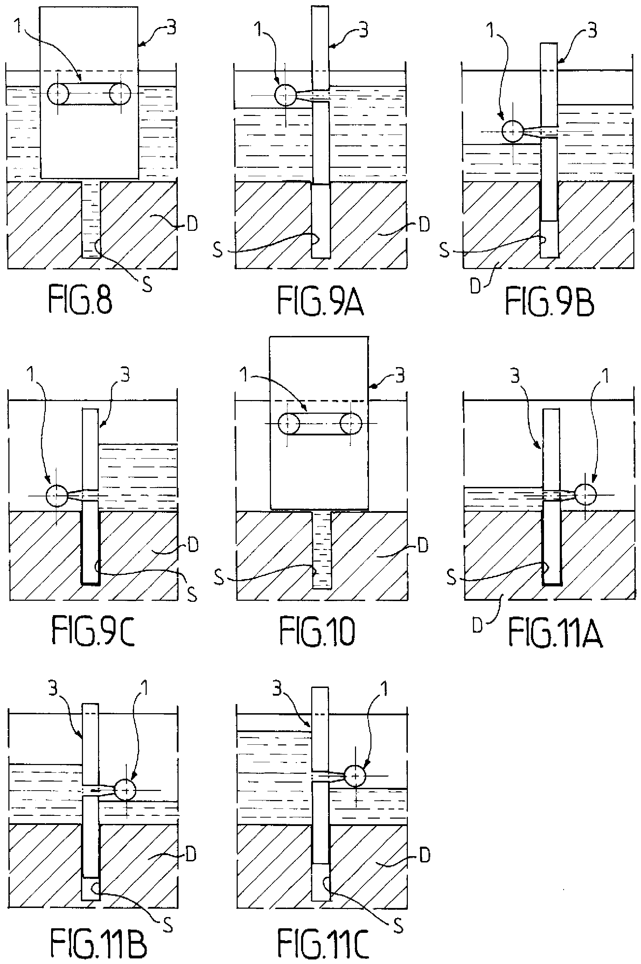

Si l'on se réfère plus particulièrement aux Figures 8 à 11C, on peut voir les différentes étapes du procédé de production d'électricité à partir de l'énergie marémotrice à l'aide de l'ensemble écluse 2 et de la turbine hydraulique 1 de la présente invention. Sur ces Figures, le plan d'eau soumis à marée, ici l'océan, se trouve sur la gauche, tandis que le bassin de rétention d'eau, ici un marais, se trouve sur la droite de la porte 3.

A l'étale de marée haute, la porte 3 est placée dans un plan sensiblement parallèle à la direction du courant d'eau et en position haute, dans laquelle elle est sortie de la souille S, jusqu'à ce que les niveaux d'eau côté soumis à marée et côté bassin de rétention d'eau soient équilibrés, comme représenté sur la Figure 8. La porte 3 est alors amenée à pivoter de 90 degrés pour se trouver dans un plan perpendiculaire au courant d'eau avec la sortie d'eau de la turbine hydraulique 1 côté soumis à marée, puis légèrement abaissée dans la souille S, comme représenté sur la Figure 9A. A cet instant, le régulateur 8 est amené à tourner de telle sorte que la surface de la fenêtre de passage 12 est minimale, de façon à alimenter par exemple une seule aube. La surface minimale de la fenêtre de passage 12 sera définie pour que l'on obtienne une vitesse de rotation du rotor 7 qui permet une vitesse de rotation nominale de la génératrice 21.

Comme on peut le voir sur les Figures 9A à 9C, au fur et à mesure que le niveau d'eau côté soumis à marée baisse, la porte 3 coulisse jusqu'à la position basse, dans laquelle la porte 3 appuie sur le fond de la souille S, et la turbine hydraulique 1 se situe juste au-dessus du niveau d'eau à basse mer, de telle sorte que la sortie d'eau de la turbine hydraulique 1 est en permanence à fleur avec le niveau de l'eau côté soumis à marée. A marée descendante, le régulateur 8 est amené à tourner de telle sorte que la surface de la fenêtre de passage 12 est agrandie jusqu'à son ouverture maximale, de façon à alimenter deux, trois, quatre, etc. aubes, pour tirer profit de l'énergie de l'eau et conserver une vitesse nominale du rotor 7, comme expliqué précédemment.

A l'étale de marée basse, la porte 3 est amenée à coulisser jusqu'à la position haute et à pivoter de 90 degrés pour se trouver dans un plan parallèle au courant d'eau, comme représenté sur la Figure 10. Lorsque les niveaux d'eau côtés soumis à marée et bassin de rétention d'eau sont équilibrés, la porte 3 est amenée à pivoter de 90 degrés pour se trouver dans un plan perpendiculaire au courant d'eau avec la sortie d'eau de la turbine hydraulique 1 côté bassin de rétention d'eau, et est amenée à coulisser jusqu'à la position basse. Le régulateur 8 est alors à nouveau amené à tourner pour rendre minimale la surface de la fenêtre de passage 12.

Comme on peut le voir sur les Figures 11A à 11C, au fur et à mesure que le niveau d'eau côté bassin de rétention d'eau augmente, ce qui va 3 à 4 fois moins vite que l'augmentation du niveau d'eau soumis à la marée, la porte 3 coulisse jusqu'à la position haute, de telle sorte que la sortie d'eau de la turbine hydraulique 1 est en permanence à fleur avec le niveau de l'eau côté bassin de rétention d'eau. A marée montante, le régulateur 8 est amené à tourner de telle sorte que la surface de la fenêtre de passage 12 augmente progressivement jusqu'à l'ouverture maximale. A marée haute, lorsque les niveaux d'eau côté soumis à marée et côté bassin de rétention d'eau doivent être équilibrés, la porte 3 pivote à nouveau en position haute de 90 degrés pour se trouver dans un plan sensiblement parallèle à la direction du courant d'eau, comme représenté sur la Figure 8. Les étapes précédentes sont répétées pour chaque cycle de marée.

On souligne ici que, lorsque l'on indique que la porte 3, et donc la turbine hydraulique 1, est placée « en sortie » du plan d'eau présentant le trop-plein (à savoir, le marais), on utilise comme référence la direction de l'écoulement d'eau et l'on se place dans le cas de la marée descendante. A l'évidence, à marée montante, la porte 3, et donc la turbine hydraulique 1, est placée « en entrée » du plan d'eau (qui ne présente plus le trop-plein).

On souligne également que le volume total du bassin de rétention d'eau sera calculé pour que celui-ci ne se remplisse ou ne se vide que du tiers ou du quart de sa contenance lors du cycle de la marée montante ou descendante avant l'équilibrage des niveaux afin de maintenir un marnage le plus grand possible, le plus longtemps possible.

Les mouvements de pivotement et de coulissement de la porte 3 sont, de préférence, commandés par des capteurs de niveau d'eau (non représentés) positionnés de chaque côté de la porte 3. Ainsi, les différentes étapes du procédé décrit ci-dessus sont effectuées automatiquement.

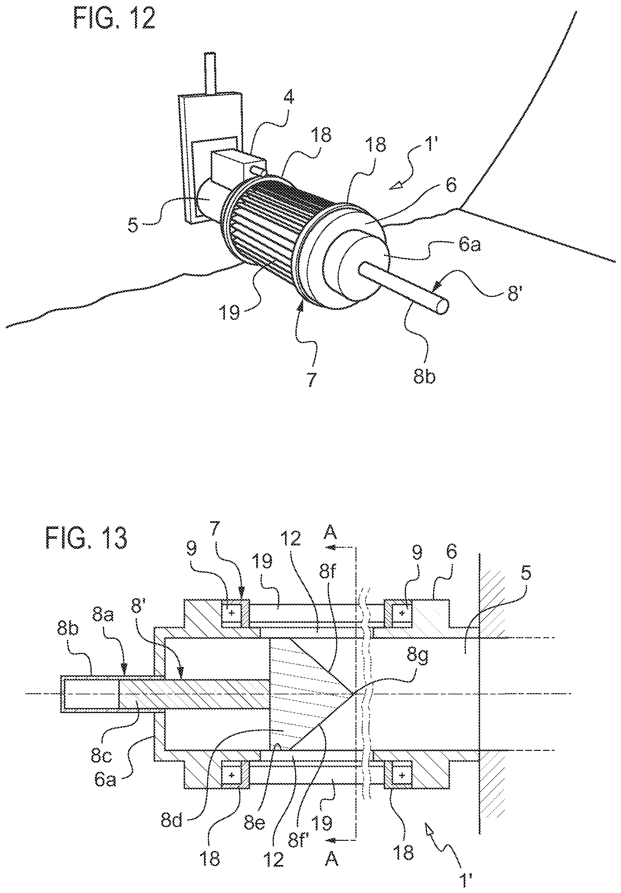

Si l'on se réfère maintenant aux Figure 12 à 15, on peut voir que l'on y a représenté une turbine hydraulique 1' selon un second mode de réalisation de la présente invention.

La turbine hydraulique 1' comprend, de manière analogue à la turbine 1 selon le premier mode de réalisation, un stator 6 comprenant deux fenêtres d'éjection 12, un rotor 7 comprenant deux anneaux 18 entre lesquels sont fixées des aubes radiales 19 (représentées ici très schématiquement), rotor 7 monté sur des paliers 9 et apte à tourner autour du stator 6, le rotor 7 entraînant un système de génération d'électricité 4 (non représenté sur la Figure 13).

La turbine hydraulique 1' est de dimension sensiblement équivalente à la turbine 1 selon le premier mode de réalisation.

La turbine 1' est alimentée en eau par une unique conduite 5 fixée à une première extrémité du stator 6, et la régulation du passage de l'eau est réalisée par un régulateur 8' de type piston monté à la seconde extrémité du stator 6, et non plus par un régulateur 12 de type tube cylindrique comme dans le premier mode de réalisation.

La seconde extrémité du stator 6 est fermée par une paroi 6a dans laquelle est ménagé un trou central. Le régulateur 8' comprend un vérin hydraulique 8a monté dans le trou central de la paroi 6a, d'une manière telle que le vérin est coaxial au stator 6.

Le vérin 8a est formé d'un corps 8b cylindrique d'axe coaxial avec l'axe du stator 6, et ayant une extrémité fermée et une extrémité ouverte, l'extrémité ouverte étant sensiblement dans le même plan que la paroi 6a, et l'extrémité fermée étant hors du stator 6.

Le vérin 8a comprend également un piston 8c dont une première extrémité se trouve à l'intérieur du corps 8a, en formant une chambre fermée dans le corps 8a, et dont la seconde extrémité est munie d'une tête 8d.

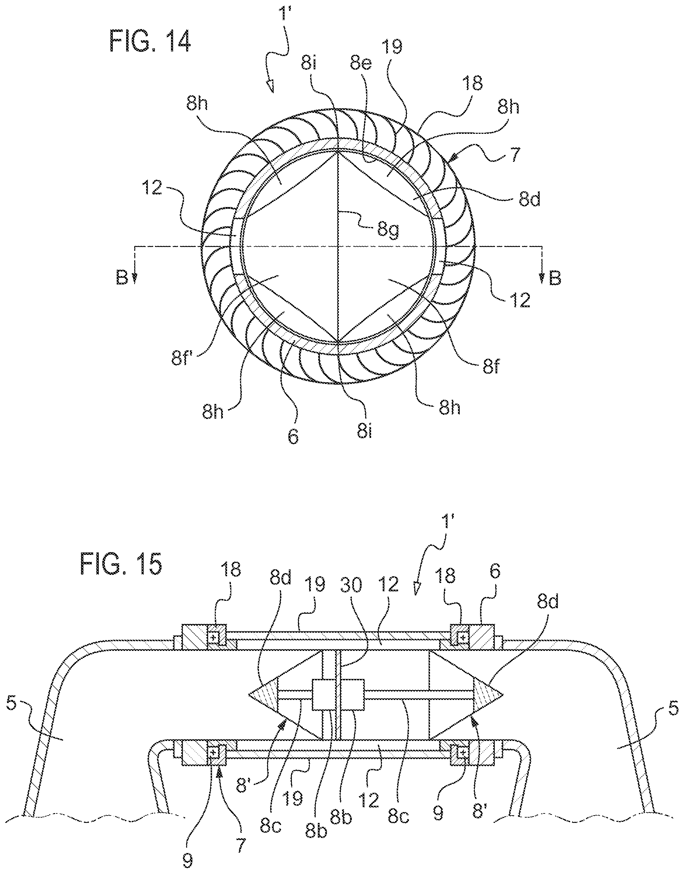

La tête 8d a, lorsque vue en coupe longitudinale dans un plan passant par les deux fenêtres 12, une forme sensiblement conique. Si l'on se réfère en particulier aux Figures 13 et 14, on peut voir que la tête 8d a ainsi une base 8e cylindrique, par laquelle la tête 8d est solidaire du piston 8c, à partir de laquelle s'étendent deux surfaces principales 8f, 8f' se rejoignant à une arête 8g formant l'extrémité libre de la tête 8d, les surfaces principales 8f et 8f' étant symétriques par rapport au plan imaginaire qui est perpendiculaire aux fenêtres 12 et auquel appartiennent l'axe du stator 6 et l'arête 8g.

La largeur des surfaces principales 8f et 8f' diminue de manière progressive de l'arête 8g à la base 8e, au niveau de laquelle ladite largeur est sensiblement égale à la largeur des fenêtres 12.

Des surfaces secondaires 8h relient la base 8e et les bords latéraux des surfaces principales 8f et 8f', en définissant deux arêtes 8i reliant chacune un sommet de l'arête 8g et la base 8e, les arêtes 8i étant parallèles à l'axe du stator 6.

Le diamètre de la base 8e est légèrement inférieur au diamètre intérieur du stator 6, avec éventuellement disposition d'un joint d'étanchéité, de telle sorte que la tête 8d divise le stator 6 en deux espaces séparés de manière étanche l'un de l'autre.

L'actionnement du vérin 8a est réalisé à l'aide d'un ensemble pneumatique ou hydraulique, non représenté, mais bien connu en soi.

Un actionnement du vérin 8a permet de déplacer la tête 8d le long de l'axe longitudinal du stator 6. Ce déplacement modifie la section de passage des fenêtres 12 par lesquelles l'eau peut sortir.

En effet, lorsque le vérin 8a a son piston 8c à son extension maximale, comme on peut le voir sur le vérin 8a de droite lorsque l'on regarde la Figure 15, la tête 8d se situe à proximité de la première ouverture du stator 6 et la section de passage des fenêtres 12 est très faible voire inexistante, à son minimum.

Au contraire, lorsque le vérin 8a a son piston rentré au maximum dans le corps 8b, comme représenté sur la gauche sur la Figure 15, la tête 8d se situe à proximité de l'extrémité fermée du stator 6 et la section de passage des fenêtres 12 est maximale.

La tête 8d du régulateur 8' peut ainsi, sous la commande du vérin 8a, être déplacée pour modifier la section de passage des fenêtres 12 pour réguler le débit d'eau au niveau des fenêtres 12 en fonction de la hauteur d'eau disponible en amont de la turbine 1, tout en conservant le même nombre d'aubes 19 alimentées en eau, lequel nombre aura été défini pour être optimal au vu des conditions d'implantation de la turbine 1' (marnages auxquels sera soumis la turbine 1', dimensions de la turbine 1', etc.). Un tel régulateur 8' de type piston permet ainsi de conserver de manière simple le meilleur rendement de la turbine 1' sur toute sa plage d'utilisation en termes de débit d'arrivée d'eau dans le stator 6.

Ce principe de régulateur de type piston peut également être mis en oeuvre dans une turbine 1' comprenant deux conduites d'entrée 5, comme représenté sur la Figure 15.

A cet effet, la turbine 1' comprend en outre une paroi centrale 30 séparant l'intérieur du stator 6 en deux chambres de même volume. Deux régulateurs 8', similaires à celui décrit ci-dessus, sont situés à l'intérieur du stator 6, avec l'extrémité fermée de leur vérin 8a solidaire de la paroi centrale 30 et les têtes 8d dirigées chacune vers la conduite d'entrée 5 respective. En d'autres termes, les têtes 8d sont opposées l'une à l'autre.

De la même manière que décrit ci-dessus, lorsque les vérins 8a ont leurs pistons 8c à leur élongation maximale, les têtes 8d se situent chacune à proximité de la conduite d'entrée 5 respective et la section de passage des fenêtres 12 est très faible voire inexistante, à son minimum. A cet effet, les têtes 8d pourront être avantageusement creuses, pour recevoir une partie des moyens commandant leur déplacement (vérin). Au contraire, lorsque les vérins 8a ont leurs pistons rentrés au maximum dans les cylindres 8b, les têtes 8d se situent à proximité de la paroi centrale 30 et la section de passage des fenêtres 12 est maximale.

La turbine 1' peut être installée, de la même manière que la turbine 1 selon le premier mode de réalisation, sur un ensemble porte écluse 2 ayant une porte 3.

Il est bien entendu que les modes de réalisation particuliers qui viennent d'être décrits ont été donnés à titre indicatif et non limitatif et que des modifications peuvent être apportées sans que l'on s'écarte pour autant du cadre de la présente invention.

Ainsi, par exemple, la turbine hydraulique selon la présente invention peut être utilisée sans l'ensemble porte écluse décrite ci-dessus. Par exemple, la turbine hydraulique peut être installée à poste fixe au travers de la digue d'un plan d'eau de plusieurs mètres de profondeur, alimenté par un cours d'eau débitant plusieurs milliers de mètres cubes par heure.

## Revendications

1. Turbine hydraulique (1, 1') destinée à être installée en sortie d'un plan d'eau, la turbine hydraulique (1, 1') comprenant un stator (6) et un rotor (7) destiné à être relié à un système de génération d'électricité (4), le stator (6) étant formé par un tube, de préférence cylindrique, dans lequel débouche au moins une conduite d'arrivée d'eau (5), et le rotor (7) étant formé par au moins une roue à aubes comprenant au moins deux anneaux (18) centrés sur l'axe dudit tube et reliés entre eux par des aubes (19), l'au moins une roue à aubes étant montée de manière sensiblement étanche sur l'extérieur dudit tube, à rotation autour de l'axe de ce dernier, avec les aubes (19) donnant sur l'extérieur, **caractérisée par le fait qu'**au moins une fenêtre de passage (12) est ménagée à travers la paroi dudit tube et débouche directement sur au moins une aube (19) de la roue à aubes en formant, avec ladite au moins une aube (19), un chemin sensiblement étanche vis-à-vis de l'extérieur au niveau de la transition entre le stator (6) et ladite au moins une aube (19) de façon à permettre l'écoulement de l'eau dans ledit chemin, du stator (6) au rotor (7), jusqu'à l'extrémité libre de ladite au moins une aube (19), la turbine hydraulique (1, 1') étant destinée à être installée à une hauteur inférieure à la surface libre de l'eau dans ledit plan d'eau de telle sorte qu'en fonctionnement en régime permanent, de l'eau provenant dudit plan d'eau remplit l'au moins une conduite d'arrivée d'eau (5) et le stator (6) et s'écoule, en passant par l'au moins une fenêtre de passage (12), sur au moins une aube (19) où elle est déviée de façon à appuyer sur celle-ci pour faire tourner la roue à aubes, avant d'être projetée vers l'extérieur en sortie de ladite au moins une aube (19).

2. Turbine hydraulique (1, 1') selon la revendication 1, **caractérisée par le fait qu'**elle comprend deux conduites d'arrivée d'eau (5) reliées aux deux extrémités du stator (6).

3. Turbine hydraulique (1, 1') selon l'une des revendications 1 ou 2, **caractérisée par le fait qu'**elle comprend plusieurs fenêtres de passage (12) entre le stator (6) et le rotor (7) .

4. Turbine hydraulique (1, 1') selon l'une des revendications 1 à 3, **caractérisée par le fait qu'**elle comprend en outre, pour la ou chaque ou plusieurs des fenêtres de passage (12), des moyens de régulation (8 ; 8') du passage de l'eau du stator (6) au rotor (7), lesquels moyens de régulation (8 ; 8') sont aptes à faire varier la surface de la ou des fenêtres de passage (12) en les fermant plus ou moins.

5. Turbine hydraulique (1) selon la revendication 4, **caractérisée par le fait que** les moyens de régulation (12) sont formés par un tube cylindrique monté entre le stator (6) et le rotor (7) et à rotation autour de l'axe du stator (6), au moins une ouverture (13) de dimension correspondant à celle de la fenêtre de passage (12) étant ménagée dans ledit tube cylindrique de façon à être apte à être positionnée au moins en partie en regard de la fenêtre de passage (12).

6. Turbine hydraulique (1') selon la revendication 4, **caractérisée par le fait que** les moyens de régulation (8') sont formés par au moins un piston (8c) monté à coulissement dans le stator (6) et déplaçable en translation le long du stator (6), et ainsi des fenêtres de passage (12), par des moyens de déplacement (8a) situés d'un côté du piston (8c), la tête de piston (8d) séparant de manière sensiblement étanche les deux espaces intérieurs du stator (6) qui se situent de part et d'autre de la tête de piston (8d).

7. Turbine hydraulique (1') selon la revendication 6, **caractérisée par le fait que** sont prévues deux fenêtres de passage (12) diamétralement opposées l'une de l'autre, la tête de piston (8d) a une base cylindrique (8e) à partir de laquelle s'étendent, côté opposé au piston (8c), deux surfaces principales (8f, 8f') inclinées se rejoignant à une arête (8g) perpendiculaire au plan passant par les fenêtres de passage (12) et l'axe longitudinal du stator (6), avec de préférence la largeur de chaque surface principale (8f, 8f') diminuant de l'arête (8g) jusqu'à la fenêtre de passage (12) respective, où la largeur de la surface principale (8f, 8f') est sensiblement égale à celle de la fenêtre de passage (12), de façon à orienter l'écoulement d'eau vers les fenêtres de passage (12).

8. Turbine hydraulique (1') selon l'une des revendications 6 et 7, **caractérisée par le fait qu'**elle comprend deux pistons (8'), disposés avec leurs têtes (8d) opposées l'une à l'autre, leurs moyens de déplacement (8a) étant solidaires d'une cloison (30) séparant l'intérieur du stator (6) en deux chambres de même volume, la turbine (1') étant alimentée par deux conduites d'arrivée d'eau (5).

9. Turbine hydraulique (1, 1') selon l'une des revendications 1 à 8, **caractérisée par le fait que** le rotor (7) est monté à rotation autour du stator (6) par l'intermédiaire de deux paliers (9) de type butée à billes montés aux deux extrémités du stator (6) et du rotor (7), chaque palier (9) comprenant une première bague qui est solidaire du stator (6) et une seconde bague qui est solidaire du rotor (6).

10. Turbine hydraulique (1, 1') selon l'une des revendications 1 à 9, **caractérisée par le fait que** la ou chaque conduite d'arrivée d'eau (5) est une conduite coudée présentant un angle de sensiblement 90 degrés, de telle sorte que la partie de la conduite (5) située entre l'extrémité (5b) raccordée au stator (6) et le coude (5e) s'étend selon l'axe de rotation du rotor (7), et que la partie (5c) de la conduite (5) située entre le coude (5e) et l'extrémité opposée au stator (6), dite extrémité d'admission d'eau (5a), s'étend selon un axe perpendiculaire à l'axe de rotation du rotor (7), l'aire de section transversale de la conduite (5) diminuant de l'extrémité d'admission d'eau (5a) vers le coude (5e).

11. Turbine hydraulique (1, 1') selon l'une des revendications 1 à 10, **caractérisée par le fait que** l'écartement entre deux aubes (19) consécutives est sensiblement constant ou, de préférence, décroissant de l'intérieur de la roue à aubes vers l'extérieur de celle-ci.

12. Ensemble porte écluse à guillotine (2) destiné à être installé en sortie d'un plan d'eau, l'ensemble porte écluse (2) comprenant une porte (3) montée coulissante verticalement entre une position haute et une position basse dans un châssis de base fixe (22), **caractérisé par le fait que** la porte (3) est équipée d'une turbine hydraulique (1, 1') telle que définie à l'une des revendications 1 à 11, la turbine hydraulique (1, 1') étant montée sur la porte (3) avec la sortie de la turbine hydraulique (1) sur un côté de la porte (3) et l'admission d'eau de la turbine hydraulique (1) sur l'autre côté de la porte (3), et un système de génération d'électricité (4) étant monté en partie supérieure de la porte (3), la porte (3) étant montée pivotante à 180 degrés autour d'un axe vertical.

13. Procédé de production d'électricité à partir de forces marémotrices, à l'aide de l'ensemble porte écluse (2) tel que défini à la revendication 12 portant la turbine hydraulique (1, 1') telle que définie à l'une des revendications 1 à 11, l'ensemble porte écluse (2) étant installé à l'interface entre un cours d'eau ou plan d'eau soumis à la marée, et un bassin de rétention d'eau, **caractérisé par le fait qu'**il comprend les étapes consistant à :
- à l'étale de marée haute, la porte (3) étant placée dans un plan sensiblement parallèle à la direction du courant d'eau et en position haute et les niveaux d'eau côté soumis à la marée et côté bassin de rétention d'eau étant équilibrés, faire pivoter la porte (3) de 90 degrés pour la placer dans un plan perpendiculaire au courant d'eau avec la sortie de la turbine hydraulique (1, 1') côté soumis à la marée ;
- au fur et à mesure que le niveau d'eau côté soumis à la marée baisse, faire descendre la porte (3) avec, de préférence, asservissement du coulissement vers le bas en fonction de signaux de niveaux d'eau fournis par des capteurs de niveau d'eau positionnés de chaque côté de ladite interface, de telle sorte que la sortie de la turbine hydraulique (1, 1') est en permanence à fleur avec le niveau de l'eau côté soumis à marée, jusqu'à ce que la porte (3) atteigne la position basse ;
- à l'étale de marée basse, faire monter la porte (3) jusqu'à la position haute puis la faire pivoter de 90 degrés pour la placer dans un plan parallèle à la direction du courant d'eau afin d'équilibrer les niveaux d'eau côtés soumis à marée et bassin de rétention d'eau, puis, lorsque lesdits niveaux sont équilibrés, faire pivoter la porte (3) de 90 degrés pour la placer dans un plan perpendiculaire au courant d'eau avec la sortie de la turbine hydraulique (1, 1') côté bassin de rétention d'eau, puis la faire descendre jusqu'à la position basse ;
- au fur et à mesure que le niveau d'eau côté bassin de rétention d'eau augmente, faire monter la porte (3) avec, de préférence, asservissement du coulissement vers le haut en fonction de signaux de niveaux d'eau fournis par lesdits capteurs de niveau d'eau, de telle sorte que la sortie de la turbine hydraulique (1, 1') est en permanence à fleur avec le niveau de l'eau côté bassin de rétention d'eau ; et
- répéter les étapes précédentes.

## Patentansprüche

1. Wasserturbine (1, 1'), die bestimmt ist, am Ausgang eines Gewässers installiert zu sein, wobei die Wasserturbine (1, 1') einen Stator (6) und einen Rotor (7) umfasst, der bestimmt ist, mit einem Stromerzeugungssystem (4) verbunden zu sein, wobei der Stator (6) von einem vorzugsweise zylindrischen Rohr gebildet ist, in welches mindestens eine Wasserzufuhrleitung (5) ausmündet, und der Rotor (7) von mindestens einem Schaufelrad gebildet ist, umfassend mindestens zwei Ringe (18), die auf der Achse des Rohrs zentriert und untereinander durch Schaufeln (19) verbunden sind, wobei das mindestens ein Schaufelrad etwa dicht auf dem Äußeren des Rohrs rotierend um die Achse desselben mit den nach außen zeigenden Schaufeln (19) angebracht ist, **dadurch gekennzeichnet, dass** mindestens ein Durchgangsfenster (12) durch die Wand des Rohrs ausgebildet ist und direkt über mindestens einer Schaufel (19) des Schaufelrads ausmündet, indem es mit der mindestens einen Schaufel (19) einen etwa dichten Weg gegenüber außerhalb im Bereich des Übergangs zwischen dem Stator (6) und der mindestens einen Schaufel (19) derart bildet, dass das Fließen von Wasser in dem Weg vom Stator (6) zum Rotor (7) bis zum freien Ende der mindestens einen Schaufel (19) erlaubt ist, wobei die Wasserturbine (1, 1') bestimmt ist, in einer Höhe installiert zu sein, die unter der freien Oberfläche des Wassers in diesem Gewässer ist, so dass im Dauerbetrieb Wasser von dem Gewässer die mindestens eine Wasserzufuhrleitung (5) und den Stator (6) füllt und über das mindestens ein Durchgangsfenster (12) über mindestens eine Schaufel (19) fließt, wo es derart abgelenkt wird, dass es auf diese drückt, um das Schaufelrad zu drehen, bevor es nach außen aus der mindestens einen Schaufel (19) projiziert wird.

2. Wasserturbine (1, 1') nach Anspruch 1, **dadurch gekennzeichnet, dass** sie zwei Wasserzufuhrleitungen (5) umfasst, die mit den zwei Enden des Stators (6) verbunden sind.

3. Wasserturbine (1, 1') nach einem der Ansprüche 1 oder 2, **dadurch gekennzeichnet, dass** sie mehrere Durchgangsfenster (12) zwischen dem Stator (6) und dem Rotor (7) umfasst.

4. Wasserturbine (1, 1') nach einem der Ansprüche 1 bis 3, **dadurch gekennzeichnet, dass** sie ferner für das oder jedes oder mehrere der Durchgangsfenster (12) Reguliermittel (8; 8') des Durchgangs des Wassers vom Stator (6) zum Rotor (7) umfasst, wobei die Reguliermittel (8; 8') imstande sind, die Oberfläche des oder der Durchgangsfenster (12) zu verändern, indem sie mehr oder weniger geschlossen werden.

5. Wasserturbine (1) nach Anspruch 4, **dadurch gekennzeichnet, dass** die Reguliermittel (12) von einem zylindrischen Rohr gebildet sind, das zwischen dem Stator (6) und dem Rotor (7) und rotierend um die Achse des Stators (6) angebracht ist, wobei mindestens eine Öffnung (13) mit einer Abmessung, die der des Durchgangsfensters (12) entspricht, in dem zylindrischen Rohr derart ausgebildet ist, dass sie imstande ist, mindestens teilweise gegenüber dem Durchgangsfenster (12) positioniert zu sein.

6. Wasserturbine (1') nach Anspruch 4, **dadurch gekennzeichnet, dass** die Reguliermittel (8') von mindestens einem Kolben (8c) gebildet sind, der gleitend in dem Stator (6) angebracht ist und translatorisch entlang des Stators (6) und somit der Durchgangsfenster (12) anhand von Verlagerungsmitteln (8a), die sich auf einer Seite des Kolbens (8c) befinden, verlagerbar ist, wobei der Kolbenkopf (8d) die zwei Innenräume des Stators (6), die sich beiderseits des Kolbenkopfs (8d) befinden, etwa dicht trennt.

7. Wasserturbine (1') nach Anspruch 6, **dadurch gekennzeichnet, dass** zwei Durchgangsfenster (12) vorgesehen sind, die einander diametral gegenüberliegen, der Kolbenkopf (8d) eine zylindrische Basis (8e) hat, ab der sich auf der dem Kolben (8c) gegenüberliegenden Seite zwei geneigte Hauptoberflächen (8f, 8f') erstrecken, die sich in einer Kante (8g) senkrecht zu der Ebene treffen, die durch die Durchgangsfenster (12) und die Längsachse des Stators (6) verläuft, mit vorzugsweise der Breite jeder Hauptoberfläche (8f, 8f'), die von der Kante (8g) bis zum jeweiligen Durchgangsfenster (12) abnimmt, wobei die Breite der Hauptoberfläche (8f, 8f') etwa gleich der des Durchgangsfensters (12) derart ist, dass das fließende Wasser zu den Durchgangsfenstern (12) gelenkt wird.

8. Wasserturbine (1') nach einem der Ansprüche 6 und 7, **dadurch gekennzeichnet, dass** sie zwei Kolben (8') umfasst, die mit ihren Köpfen (8d) einander gegenüberliegend angeordnet sind, wobei ihre Verlagerungsmittel (8a) mit einer Trennwand (30) fest verbunden sind, die das Innere des Stators (6) in zwei Kammern mit dem gleichen Volumen trennt, wobei die Turbine (1') von zwei Wasserzufuhrleitungen (5) versorgt wird.

9. Wasserturbine (1, 1') nach einem der Ansprüche 1 bis 8, **dadurch gekennzeichnet, dass** der Rotor (7) mittels zweier Lager (9) vom Typ Axialkugellager um den Stator (6) rotierend angebracht ist, die an den zwei Enden des Stators (6) und des Rotors (7) angebracht sind, wobei jedes Lager (9) einen ersten Ring umfasst, der mit dem Stator (6) fest verbunden ist, und einen zweiten Ring, der mit dem Rotor (6) fest verbunden ist.

10. Wasserturbine (1, 1') nach einem der Ansprüche 1 bis 9, **dadurch gekennzeichnet, dass** die oder jede Wasserzufuhrleitung (5) eine gekrümmte Leitung ist, die einen Winkel von etwa 90 Grad derart aufweist, dass sich der Teil der Leitung (5), der sich zwischen dem an dem Stator (6) angebrachten Ende (5b) und dem Knie (5e) befindet, in der Rotationsachse des Rotors (7) erstreckt, und dass sich der Teil (5c) der Leitung (5), der sich zwischen dem Knie (5e) und dem dem Stator (6) entgegengesetzten Ende, bezeichnet als Wasserzulaufende (5a), befindet, in einer Achse senkrecht zur Rotationsachse des Rotors (7) erstreckt, wobei die Querschnittsfläche der Leitung (5) vom Wasserzulaufende (5a) zum Knie (5e) abnimmt.

11. Wasserturbine (1, 1') nach einem der Ansprüche 1 bis 10, **dadurch gekennzeichnet, dass** der Abstand zwischen zwei aufeinanderfolgenden Schaufeln (19) etwa konstant ist oder vorzugweise vom Inneren des Schaufelrads zum Äußeren desselben abnimmt.

12. Schleusenhubtoreinheit (2), die bestimmt ist, ab Ausgang eines Gewässers installiert zu sein, wobei die Schleusentoreinheit (2) ein Tor (3) umfasst, das vertikal gleitend zwischen einer hohen Stellung und einer niedrigen Stellung in einem festen Basisrahmen (22) angebracht ist, **dadurch gekennzeichnet, dass** das Tor (3) mit einer Wasserturbine (1, 1') nach einem der Ansprüche 1 bis 11 ausgestattet ist, wobei die Wasserturbine (1, 1') über dem Tor (3) mit dem Ausgangs der Wasserturbine (1) auf einer Seite des Tores (3) und dem Wasserzulauf der Wasserturbine (1) auf der anderen Seite des Tores (3) angebracht ist, und ein Stromerzeugungssystem (4) im oberen Teil des Tores (3) angebracht ist, wobei das Tor (3) um 180 Grad schwenkend um eine vertikale Achse angebracht ist.

13. Stromerzeugungsverfahren, ausgehend von Gezeitenkräften mit Hilfe der Schleusentoreinheit (2) nach Anspruch 12, welche die Wasserturbine (1, 1') nach einem der Ansprüche 1 bis 11 trägt, wobei die Schleusentoreinheit (2) an der Schnittstelle zwischen einem Wasserlauf oder einem Gewässer installiert ist, das den Gezeiten unterworfen ist, und einem Wasserrückhaltebecken, **dadurch gekennzeichnet, dass** es die folgenden Schritte umfasst:
- bei Flut-Stauwasser, wenn das Tor (3) in einer Ebene platziert ist, die etwa parallel zur Richtung des Wasserstroms ist und in hoher Stellung und die Wasserstände auf der Seite, die den Gezeiten unterworfen ist, und auf der Seite des Wasserrückhaltebeckens ausgeglichen sind, Schwenken des Tores (3) um 90 Grad, um es in eine Ebene senkrecht zum Wasserstrom mit dem Ausgang der Wasserturbine (1, 1') zu der Seite, die den Gezeiten unterworfen ist, zu platzieren;
- mit zunehmendem Sinken des Wasserstandes auf der Seite, die den Gezeiten unterworfen ist, Absenken des Tores (3) mit vorzugsweiser Regelung des Gleitens nach unten in Abhängigkeit von Wasserstandsignalen, die von Wasserstandsensoren bereitgestellt werden, die auf jeder Seite der Schnittstelle installiert sind, so dass der Ausgang der Wasserturbine (1, 1') ständig bündig mit dem Wasserstand der Seite ist, die den Gezeiten ausgesetzt ist, bis das Tor (3) seine niedrige Stellung erreicht;
- bei Ebbe-Stauwasser, Anheben des Tores (3) bis zu der hohen Stellung, dann Schwenken um 90 Grad, um es in eine zu der Richtung des Wasserstroms parallele Richtung zu schwenken, um die Wasserstände auf der Seite, die den Gezeiten und dem Wasserrückhaltebecken unterworfen sind, auszugleichen, dann, wenn die Stände ausgeglichen sind, das Tor (3) um 90 Grad schwenken, um es in eine Ebene senkrecht zum Wasserstrom mit dem Ausgang der Wasserturbine (1, 1') zu der Seite des Wasserrückhaltebeckens zu platzieren, dann Absenken bis in seine niedrige Stellung;
- mit zunehmendem Ansteigen des Wasserstandes auf der Seite des Wasserrückhaltebeckens, Anheben des Tores (3) mit vorzugsweiser Regelung des Gleitens nach oben in Abhängigkeit von Wasserstandsignalen, die von Wasserstandsensoren derart bereitgestellt werden, dass der Ausgang der Wasserturbine (1, 1') ständig bündig mit dem Wasserstand der Seite des Wasserrückhaltebeckens ist, und
- Wiederholen der vorangehenden Schritte.

## Claims

1. A water turbine (1, 1') intended to be installed at the outlet of a body of water, the hydraulic turbine (1, 1') comprising a stator (6) and a rotor (7) intended to be connected to an electricity generating system (4), the stator (6) being formed by a tube, preferably cylindrical, into which at least one water intake pipe (5) opens, and the rotor (7) being formed by at least one waterwheel comprising at least two rings (18) centered on the axis of said tube and connected to one another by blades (19), the at least one waterwheel being mounted substantially watertightly on the outside of said tube, rotatable around the axis of the latter, with the blades (19) overlooking the outside, **characterized in that** at least one passage window (12) is provided through the wall of said tube and opens directly onto at least one blade (19) of the waterwheel while forming, with said at least one blade (19), a substantially watertight path with respect to the outside at the transition between the stator (6) and said at least one blade (19) so as to allow the flow of water in said path, from the stator (6) to the rotor (7), up to the free end of said at least one blade (19), the water turbine (1, 1') being intended to be installed at a height lower than the free surface of the water in said body of water such that in steady-state operation, water coming from said body of water fills the at least one water intake pipe (5) and the stator (6) and flows, by passing through the at least one passage window (12), over at least one blade (19) where it is deflected so as to bear thereon to cause the waterwheel to rotate, before being projected to the outside at the outlet of said at least one blade (19).

2. The water turbine (1, 1') according to claim 1, **characterized in that** it comprises two water intake pipes (5) connected to the two ends of the stator (6).

3. The water turbine (1, 1') according to one of claims 1 or 2, **characterized in that** it comprises several passage windows (12) between the stator (6) and the rotor (7) .

4. The water turbine (1, 1') according to one of claims 1 to 3, **characterized in that** it further comprises, for the or each or several of the passage windows (12), regulating means (8; 8') for the passage of the water from the stator (6) to the rotor (7), the regulating means (8; 8') being able to vary the surface of the passage window(s) (12) by closing them more or less.

5. The water turbine (1) according to claim 4, **characterized in that** the regulating means (12) are formed by a cylindrical tube mounted between the stator (6) and the rotor (7) and rotatable around the axis of the stator (6), at least one opening (13) of a size corresponding to that of the passage window (12) being provided in said cylindrical tube so as to be able to be positioned at least partially opposite the passage window (12).

6. The water turbine (1') according to claim 4, **characterized in that** the regulating means (8') are formed by at least one piston (8c) mounted sliding in the stator (6) and translatable along the stator (6), and thus along the passage windows (12), by movement means (8a) located on one side of the piston (8c), the piston head (8d) substantially watertightly separating the two inner spaces of the stator (6) that are located on either side of the piston head (8d).

7. The water turbine (1') according to claim 6, **characterized in that** two passage windows (12) diametrically opposite one another are provided, the piston head (8d) has a cylindrical base (8e) from which, on the side opposite the piston (8c), two inclined main surfaces (8f, 8f') extend coming together at a ridge (8g) perpendicular to the plane passing through the passage windows (12) and the longitudinal axis of the stator (6), preferably with the width of each main surface (8f, 8f') decreasing from the ridge (8g) to the respective passage window (12), where the width of the main surface (8f, 8f') is substantially equal to that of the passage window (12), so as to orient the flow of water toward the passage windows (12).

8. The water turbine (1') according to one of claims 6 and 7, **characterized in that** it comprises two pistons (8'), arranged with their heads (8d) opposite one another, their movement means (8a) being secured to a partition (30) separating the inside of the stator (6) into two chambers of equal volume, the turbine (1') being supplied by two water intake pipes (5).

9. The water turbine (1, 1') according to one of claims 1 to 8, **characterized in that** the rotor (7) is mounted rotating around the stator (6) by means of two bearings (9) of the thrust ball bearing type, mounted at the two ends of the stator (6) and the rotor (7), each bearing (9) comprising a first ring that is secured to the stator (6) and a second ring that is secured to the rotor (6) .

10. The water turbine (1, 1') according to one of claims 1 to 9, **characterized in that** the or each water intake pipe (5) is a bent pipe having an angle of substantially 90 degrees, such that the part of the pipe (5) located between the end (5b) connected to the stator (6) and the bend (5e) extends along the rotation axis of the rotor (7), and the part (5c) of the pipe (5) located between the bend (5e) and the end opposite the stator (6), so-called water intake end (5a), extends along an axis perpendicular to the rotation axis of the rotor (7), the cross-section area of the pipe (5) decreasing from the water intake end (5a) to the bend (5e).

11. The water turbine (1, 1') according to one of claims 1 to 10, **characterized in that** the separation between two consecutive blades (19) is substantially constant, or preferably, decreasing from the inside of the waterwheel toward the outside thereof.

12. A sliding lock gate assembly (2) intended to be installed at the outlet of a body of water, the lock gate assembly (2) comprising a door (3) mounted sliding vertically between a high position and a low position in a fixed base chassis (22), **characterized in that** the door (3) is equipped with a water turbine (1, 1') as defined in one of claims 1 to 11, the water turbine (1, 1') being mounted on the door (3) with the outlet of the water turbine (1) on one side of the door (3) and the water intake of the water turbine (1) on the other side of the door (3), and an electricity generating system (4) being mounted in the upper part of the door (3), the door (3) being mounted pivoting at 180 degrees around a vertical axis.

13. A method for producing electricity from tidal forces, using the lock gate assembly (2) as defined in claim 12 bearing the waterwheel (1, 1') as defined in one of claims 1 to 11, the lock gate assembly (2) being installed at the interface between a waterway or body of water subject to the tide, and a water retention reservoir, **characterized in that** it comprises the following steps:
- at the high slack tide, the door (3) being placed in a plane substantially parallel to the direction of the water current and in the high position and the water levels on the side subject to the tide and the water retention reservoir side being balanced, pivoting the door (3) by 90 degrees to place it in a plane perpendicular to the water current with the outlet of the water turbine (1, 1') on the side subject to the tide;
- as the water level on the side subject to the tide decreases, lowering the door (3), preferably with slaving of the sliding downward as a function of water level signals provided by water level sensors positioned on each side of said interface, such that the outlet of the water turbine (1, 1') is constantly flush with the water level on the side subject to the tide, until the door (3) reaches the low position;
- at the low slack tide, causing the door (3) to rise to the high position, then pivoting it by 90 degrees to place it in a plane parallel to the direction of the water current in order to balance the water levels on the side subject to the tide and the water retention reservoir side, then, when said levels are balanced, pivoting the door (3) by 90 degrees to place it in a plane perpendicular to the water current with the outlet of the water turbine (1, 1') on the water retention reservoir side, then lowering it to the low position;
- as the water level on the water retention reservoir side increases, raising the door (3), preferably with slaving of the sliding upward as a function of water level signals provided by said water level sensors, such that the outlet of the water turbine (1, 1') is constantly flush with the water level on the water retention reservoir side; and
- repeating the preceding steps.
